Europäisches Patentamt

European Patent Office

Office européen des brevets

(11) Publication number: **0 109 700**
**B1**

# (12) EUROPEAN PATENT SPECIFICATION

(45) Date of publication of patent specification: **06.05.87**

(21) Application number: **83201503.6**

(22) Date of filing: **19.10.83**

(51) Int. Cl.⁴: **C 21 C 5/38,** C 02 F 11/00, C 04 B 18/08, C 04 B 18/14

(54) Composition obtained by mixing a pozzolanic material and a moist material.

(30) Priority: **20.10.82 NL 8204052**

(43) Date of publication of application:
**30.05.84 Bulletin 84/22**

(45) Publication of the grant of the patent:
**06.05.87 Bulletin 87/19**

(84) Designated Contracting States:
**AT BE CH DE FR GB IT LI LU NL SE**

(56) References cited:
EP-A-0 021 180
EP-A-0 055 004
GB-A-1 017 424
US-A-4 116 705
US-A-4 353 749

CHEMICAL ABSTRACTS, vol. 96, no. 12, June 1982, page 312, no. 204465x, Columbus, Ohio, US, P.I. BOZHENOV et al.: "Use of calcium sulfate hemihydrate (wet-prcoes phosphoric acid production waste) for the manufacture of building materials"

(73) Proprietor: **PELT & HOOYKAAS B.V.**
**1 Bijlstraat**
**NL-3087 AA Rotterdam (NL)**

(72) Inventor: **Hooykaas, Carel Willem Jan**
**44 Oranjelaan**
**NL-3062 BT Rotterdam (NL)**

(74) Representative: **van der Veken, Johannes Adriaan et al**
**EXTERPATENT B.V. Willem Witsenplein 4**
**NL-2596 BK 's-Gravenhage (NL)**

(56) References cited:
CHEMICAL ABSTRACTS, vol. 82, no. 7, 7th April 1975, page 222, no. 89564a, Columbus, Ohio, US, L.J. MINNICK et al.: "Utilization of fly ash-sulfate sludge based synthetic aggregate for highway construction use"

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The invention relates to a composition in the form of loose mass or granules obtained by mixing fly ash and a moisture containing calcium sulphate composition.

Such a composition in the form a loose mass or granules, which means a product in which separate free flowing particles are present, obtained by mixing fly ash and a moist gypsum composition in the form of calciumsulphate dihydrate is known from EP—A—0 055 004.

Unfortunately, mixing of a moisture containing calciumsulphate hemihydrate with fly ash does not provide a loose mass or granules.

However, in more recent methods of preparing phosphoric acid, substantial quantities of gypsum in the form of calciumsulphate hemihydrate are produced so that handling of this waste material in the same way as calciumsulphate dihydrate would be appreciated.

It is now the aim of the invention to provide a loose mass or granules by mixing fly ash and calciumsulphate hemihydrate.

This aim is attained in that a calciumsulphate hemihydrate base composition has been mixed with fly ash and oxisludge.

Oxisludge is a solid product caught from gases emanating from steel convertors and containing at least a volatile metal or a volatile metal compound and described in GB—A—1.017.424.

Though EP—A—0 055 004 describes a loose mass or granules obtained by mixing the solid product caught from gases emanating from steel convertors and containing at least a volatile metal or a volatile metal compound (hereinafter indicated as oxisludge) with a gypsum-containing sludge obtained in an wet process of preparing phosphoric acid, it could not be expected that such oxisludge would overcome the problem of not forming a loose mass or granules by mixing calciumsulphate hemihydrate and fly ash.

In all probability the iron as present in the oxisludge reacts with phosphoric acid physically bonded in the calciumsulphate hemihydrate which reaction involves formation of heat water both giving rise to an improved formation of granular products.

Mixing of fly ash with calciumsulphate hemihydrate is known per se from EP—A—0 021 180 but this mixing is executed with dry calciumsulphate hemihydrate so that the problem of not forming a loose mass or granules is not observed.

Preferably the oxisludge is added in an amount comprised between 0.1 and 10%, preferably an amount comprised between 1 and 5%.

Preferably in a first step the calciumsulphate should be mixed with oxisludge and 30% to 40% of the required total amount of fly ash, whereupon in a second step the obtained granules are mixed with the remaining 60% to 70% of fly ash, without the granules being compressed or desintegrated. Such mixing in a second step, may be accurately performed in a whirl bed mixer.

The present invention will be elucidated with respect to a number of exemplified embodiments.

### Example I

1000 Kg of calciumsulphate dihydrate (as obtained by preparing phosphoric acid according to the wet route) are mixed with 300 kg of fly ash; from the resulting loose mass instantaneously granules are formed.

A mixture of 100 kg of calciumsulphate hemihydrate (obtained by preparing phosphoric acid according to the wet route) with 300 kg of fly ash does not provide a loose mass nor a good granular product.

The addition of 25 kg oxisludge (described in EP—A—55004) results in a granular product.

### Example II

1000 Kg of calciumsulphate hemihydrate, as obtained by preparing phosphoric acid according to the wet route, are mixed with 25 Kg oxisludge and 90 kg fly ash, resulting in granules which can still to be compressed.

Said granules are subsequently mixed with 210 kg of fly ash in a whirl bed mixer without being compressed or desintegrated whereupon the formed granules are recovered.

## Claims

1. A composition in the form of a loose mass or granules obtained by mixing fly ash and a moisture containing calciumsulphate composition, characterised in that a calciumsulphate hemihydrate base composition has been mixed with fly ash and oxisludge.

2. A composition according to claim 1, characterised in that said oxisludge is added in an amount comprised between 0,1 and 10%, based on the total moisture-containing base composition.

3. A composition according to claim 1 or 2, characterised in that the oxisludge is added in an amount comprised between 1 and 5%.

4. A composition according to any one of the preceding claims, characterised in that the composition contains at least 10% of fly ash, preferably more than 15% of fly ash.

5. A composition according to any one of the preceding claims characterised in that the composition contains 25 to 35% of fly ash.

6. A composition according to any one of the preceding claims, characterised in that another hydraulic binder is incorporated into the composition formed into the granules or a loose mass.

7. A composition according to any one of the preceding claims, characterised in that in a first step the base composition has been mixed with oxisludge and in a second step with a second amount of fly ash without substantial compression or desintegration of the particles obtained in the first step.

## Patentansprüche

1. Gemisch in Form einer lockeren Masse oder eines Granulats, erhalten durch Mischen von Flugasche mit einem Feuchtigkeit enthaltendem Calciumsulfatgemisch, dadurch gekennzeichnet, daß ein Gemisch auf der Basis von Calciumsulfathemihydrat mit Flugasche und Sauerstoffaufblasschlamm gemischt wurde.

2. Gemisch nach Anspruch 1, dadurch gekennzeichnet, daß der Sauerstoffaufblasschlamm in einer Menge von 0,1 bis 10%, bezogen auf das gesamte Feuchtigkeit enthaltende Grundgemisch, zugegeben wird.

3. Gemisch nach Anspruch 1 oder 2, dadurch gekennzeichnet, daß der Sauerstoffaufblasschlamm in einer Menge von 1 bis 5% zugegeben wird.

4. Gemisch nach einem der vorhergehenden Ansprüche, dadurch gekennzeichnet, daß das Gemisch mindestens 10%, vorzugsweise mehr als 15% Flugasche enthält.

5. Gemisch nach einem der vorhergehenden Ansprüche, dadurch gekennzeichnet, daß es 25 bis 35% Flugasche enthält.

6. Gemisch nach einem der vorhergehenden Ansprüche, dadurch gekennzeichnet, zu einem Granulat oder einer lockeren Masse geformtem Gemisch ein weiteres hydraulisches Bindemittel zugegeben wird.

7. Gemisch nach einem der vorhergehenden Ansprüche, dadurch gekennzeichnet, daß in einer ersten Stufe das Ausgangsgemisch mit Sauerstoffaufblasschlamm aus Stahlkonvertern, der mindestens ein flüchtiges Metall oder eine flüchtige Metallverbindung enthält, und mit einer ersten Menge von Flugasche gemischt wurde, und daß es in einer zweiten Stufe mit einer zweiten Menge an Flugasche vermischt wurde, ohne daß die in der ersten Stufe erhaltenen Teilchen wesentlich zusammengepreßt oder zerkleinert wurden.

## Revendications

1. Composé ayant la forme d'une masse meuble ou de granulés obtenus en mélangeant des cendres volantes et une préparation humide contenant du sulfate de calcium, caractérisé en ce qu'un composé à base de semi-hydrate de sulfate de calcium a été mélangé avec des cendres volantes et de la boue d'oxyde.

2. Composé selon la revendication 1, caractérisé en ce qu'on ajoute ladite boue d'oxyde dans une proportion comprise entre 0,1 et 10% de la composition de base contenant de l'humidité.

3. Composé selon la revendication 1 ou 2, caractérisé en ce qu'on ajoute de la boue d'oxyde dans une proportion comprise entre 1 et 5%.

4. Composé selon l'une quelconque des revendications précédentes, caractérisé en ce que le composé contient au moins 10% de cendres volantes, de préférence plus de 15%.

5. Composé selon l'une quelconque des revendications précédentes, caractérisé en ce que le composé contient 25 à 35% de cendres volantes.

6. Composé selon l'une quelconque des revendications précédentes, caractérisé en ce qu'un autre liant hydraulique est incorporé dans le composé qui doit former les granulés ou la masse meuble.

7. Composé selon l'une quelconque des revendications précédentes, caractérisé en ce que, au cours d'une première étape, le composé de base a été mélangé avec de la boue d'oxyde provenant de convertisseurs d'acier et contenant au moins un métal ou un composé métallique volatile et avec une première quantité de cendres volantes, et, au cours d'une deuxième étape, avec une deuxième quantité de cendres volantes, sans compression ou désintégration notable des particules obtenus au cours de la première étape.